**Europäisches Patentamt**

**European Patent Office**

**Office européen des brevets**

(19)

(11) Publication number : **0 125 860 B2**

(12) # NEW EUROPEAN PATENT SPECIFICATION

(45) Date of publication of the new patent specification : **29.04.92 Bulletin 92/18**

(51) Int. Cl.⁵ : **B60R 22/00**

(21) Application number : **84303065.1**

(22) Date of filing : **08.05.84**

(54) Anchorage means for vehicle safety belts.

(30) Priority : **11.05.83 GB 8313023**
**17.05.83 GB 8313622**

(43) Date of publication of application :
**21.11.84 Bulletin 84/47**

(45) Publication of the grant of the patent :
**27.08.86 Bulletin 86/35**

(45) Mention of the opposition decision :
**29.04.92 Bulletin 92/18**

(84) Designated Contracting States :
**DE FR GB IT**

(56) References cited :
**WO-A-83/01233**
**DE-A- 2 719 325**
**DE-A- 2 932 505**
**DE-A- 2 947 391**
**DE-A- 3 139 624**
**DE-B- 2 339 910**
**GB-A- 2 070 414**
**GB-A- 2 081 568**

(73) Proprietor : **Electrolux Autoliv AB**
**Luxbacken 1**
**Stockholm (SE)**

(72) Inventor : **Cunningham, Douglas James**
**"Sambourne" 4 Church Close Dunton Bassett**
**Lutterworth Leicestershire LE16 5JY (GB)**
Inventor : **Harries, David Anthony**
**33 Sea Avenue**
**Rustington West Sussex (GB)**
Inventor : **Else, Robert Frederick**
**49 Summerfields Locks Heath**
**Nr. Southampton Hampshire (GB)**

(74) Representative : **Frankland, Nigel Howard et al**
**FORRESTER & BOEHMERT**
**Franz-Joseph-Strasse 38**
**W-8000 München 40 (DE)**

EP 0 125 860 B2

## Description

This invention relates to an adjustable shoulder anchorage assembly for a vehicle safety belt comprising a vertically extending trasck mounted on the interior of a vehicle body above the level of the shoulders of an occupant of an adjacent seat, a traveller mounted on the track, a guide member secured to the traveller and having a slot for receiving the strap of a safety belt, a latch member having a latching formation thereon, resilient mens for biasing the latching formation into engagement with one of a series of complementary formations on the track so as to inhibit movement of the traveller along the track, blocking means for preventing movement of the latching formation out of engagement with the complementary formations and a pushpad movable from a first position to a second position to inhibit the blocking means and movable from a second position to a third position to cause disengagement of the latching formation from the complementary formations.

WO-83/01233 discloses an adjustable shoulder anchorage assembly of this type, in which the latch member comprises a plate movable at right angles to the direction of movement of the traveller along the track. Ramps on the pushpad engage with the latch member to move the latching formation out of engagement with the complementary formations on the track against the action of the resilient means. The present invention aims to provide an adjustable shoulder anchorage of this type in which the force which has to be exerted on the pushpad to effect release is reduced.

According to the invention there is provided an adjustable shoulder anchorage assembly as defined in Claim 1.

The blocking means may comprise a member movable longitudinally in guides on the traveller between a position in which it engages under a projection on the latch member and a position in which it is clear of such projection, a cam formation on a pushpad being adapted to displace such member to the latter position. Alternatively, the blocking means may comprise a resilient strut projecting from the traveller generally in the direction of movement of the latch member and the pushpad, into engagement with the cam formation on the latter, such strut having a shoulder which engages under a corresponding shoulder on the latch member.

The release means preferably comprises a pushpad which is resiliently biased away from the latch member in the same direction as the latch member is resiliently biased relative to the traveller and the pushpad carries a cam formation which disables the locking means when the pushpad is moved into abutment with the latch member. Further depression of the pushpad then causes a corresponding movement of the latch member resulting in disengagement of the latching formation from the complementary formations.

Alternatively, the release means may be pivotally mounted on the traveller and the blocking means may comprise a blocking formation on the release means which is movable between a first position in which the blocking formation engages with a complementary formation on the latch member to inhibit movement of the latter from its first position, an intermediate position in which said blocking formation is disengaged from said complementary formation and an actuating formation engages with the latch member, and a third position in which said actuating formation has moved the latch member into its second position. Preferably the release means is pivotally mounted and balanced about its pivot point so as not to be susceptible to such lateral acceleration. Alternatively or additionally, the blocking formation and the complementary formation on the latch member may be so shaped that any tendency of the latch member to move towards its second position, when the manuel release means is in its first position, resists movement of the manual release means towards its intermediate position.

This, in each alternative, the blocking means inhibits accidental movement of the latch member to its released position due to inertia as a result of high lateral acceleration of the vehicle, for example due to impact.

Embodiments of the invention will now be described, by way of example, with reference to the accompanying drawings, in which:

Figure 1 is a cross-sectional view of an adjustable shoulder anchorage assembly in accordance with the invention, fitted to the B-post of a motor car;

Figure 2 is an elevation of the track of the assembly shown in Figure 1;

Figure 3 is a cross-sectional view taken on the line 3-3 in Figure 1;

Figure 4 is a cross-sectional view, similar to Figure 1, of an alternative shoulder anchorage assembly in accordance with the invention;

Figure 5 is a cross-sectional view taken on the line 5-5 in Figure 4;

Figure 6 is a cross-sectional view taken on the line 6-6 in Fig. 4;

Figures 7, 8 and 9 are schematic diagrams illustrating the latching mechanis of a further embodiment of the invention in the fully latched, partially released and fully released positions respectively; and

Figure 10 is a schematic diagram, similar to Figure 7, illustrating the latching mechanism under the effect of high lateral acceleration.

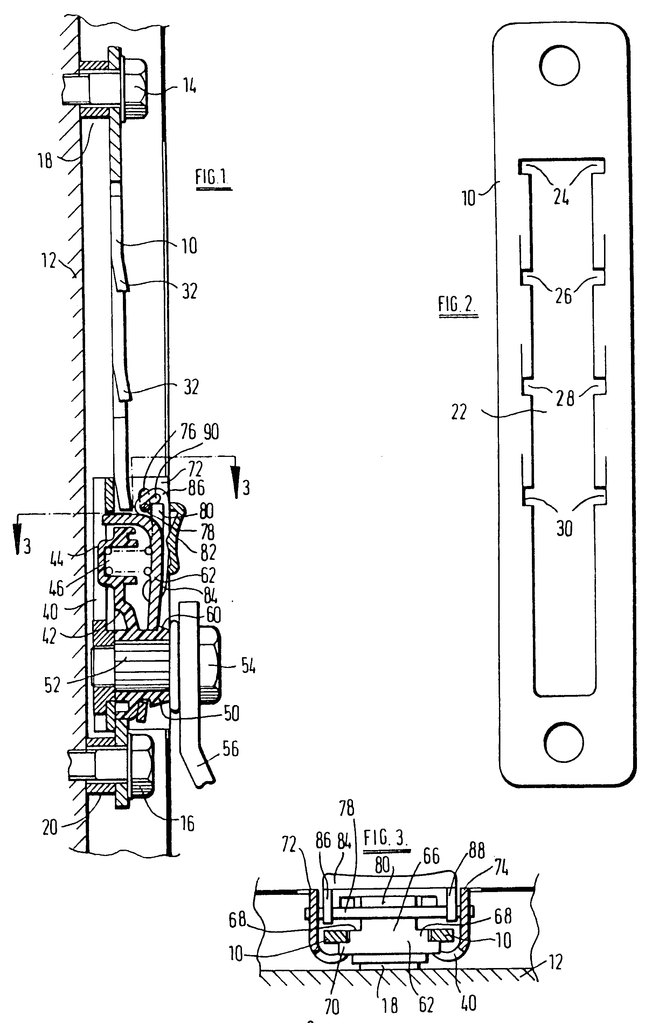

Referring to Figure 1, the track 10 of an adjustable shoulder anchorage assembly in accordance with the invention is mounted on the B-post 12 by two bolts 14 and 16 and spacers 18 and 20. As can be seen from Figure 2, the track 10 has a central elongate slot 22 with four aligned pairs of notches 24, 26, 28 and 30 in its side edges. The pair of notches 24 is disposed at the top of the slot 22. The upper edges of the other three pairs of notches 26, 28 and 30 are pressed outwardly to form lead-in ramps 32 on the side of the track 10 facing the B-post 12.

A traveller for movement along the track 10 comprises a base member 40 and a plastics body 42. The body 42 has a pocket 44 which projects through a hole in the base member 40 and accommodates a compression spring 46, the purpose of which will be explained hereinafter. The body 42 also includes a boss 50 which surrounds a metal spacer 52 surrounding a bolt 54 which is screwed into the base plate 40 and by which the slotted member 56 for receiving the seat belt strap is pivotally secured to the traveller.

The boss 50 on the plastics body 42 has a shoulder 60 on its outer end. A L-shaped latch member 62 has the end of its longer limb widened to accommodate a hole which is snapped over the shoulder 60 prior to insertion of the spacer 52, after which the latch member 62 is held captive on the boss 50. The shorter limb of the latch member 62 projects through the slot 22 in the track 10 and into a slot in the base member 40 of the traveller. As can be seen from Figure 3, the shorter limb of the latch member 62 has a main portion 66 which is narrow enough to pass through the slot 22 at any position, a pair of shoulders 68 which can pass through the slot 22 only when in aligment with one of the pairs of notches 24, 26, 28, 30, and an end portion 70 which is too wide to pass through the slot 22 even when in alignment with one of the pairs of notches but which is narrower than the length of the slot 64 in the base plate 40. The spring 46 engages with the latch member 62 so as to bias it in the clockwise direction (as viewed in Figure 1) about the fulcrum provided by the shoulder 60, the end portion 70 engaging with the side of the track 10 nearer to the B-post 12 when the shoulders 68 are received in one of the pairs of notches 24, 26, 28 and 30.

The base member 40 has outwardly facing side limbs 72 and 74 which contain elongate holes 76 through which the ends of a transverse rod 78 project. The latch 62 has a projection 80 which engages in front of the rod 78 when the latter is at the lower end of the slot 76. A pushpad 82 is pivotally mounted at 84 on the latch member 62 and has two side flanged 86 and 88 each of which has an oblique slot 90 through which the rod 78 projects. The pushpad 82 is biased by a leaf spring (not shown) away from the latch member 66. This leaf spring is much weaker than the spring 46 which biases the latch member 62 away from the base member 40.

When the shoulders 68 are received in one of the pairs of notches 24, 26, 28 and 30, movement of the traveller along the track 10 is prevented. Engagement of the rod 78 under the projection 80 prevents movement of the latch member 62 to the disengaged position. If the pushpad 82 is depressed, it first moves relative to the latch member 62, the interaction of the slots 76 and 90 moving the rod 78 clear of the projection 80. Further depression of the pushpad 82 then moves the latch member 62 inwardly, disengaging the shoulders 68 from the track 10, thus allowing the traveller to move freely therealong. On release of the pushpad 82, the shoulders 68 snap into engagement with the pair of notches 24, 26, 28 and 30 with which they next come into alignment, the leading surfaces 32 facilitating this movement when the traveller is moving downwardly. The leaf spring (not shown) biasing the pushpad 82 away from the latch member 62 then pulls the rod 78 back under the projection 80.

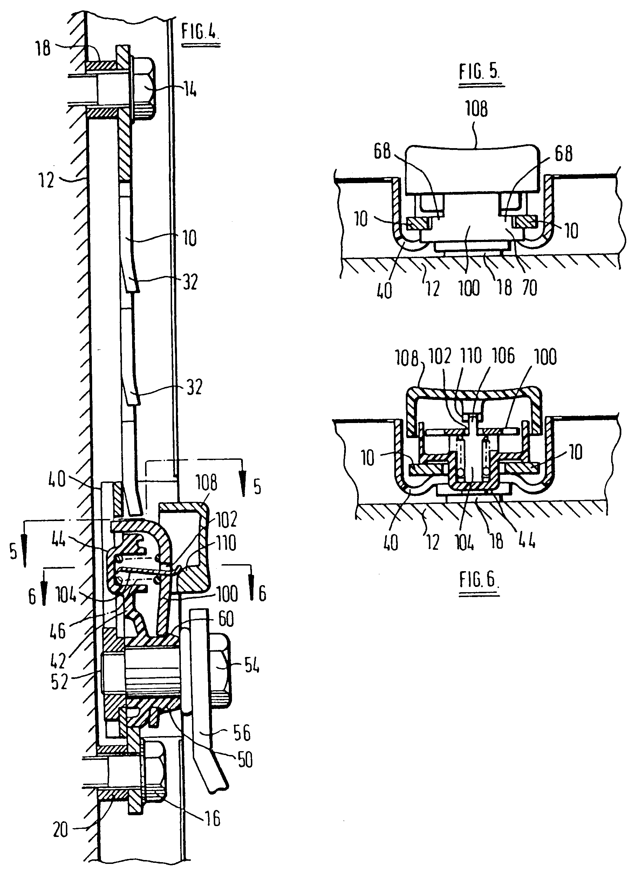

Figures 4 to 6 illustrate an alternative embodiment of the invention which has a different blocking means from that illustrated in Figures 1 to 3. Many of the components of the assembly are identical with the corresponding components of the assembly illustrated in Figures 1 to 3. These identical components are denoted by the same reference numerals and will not be described in detail.

The latch member 100 illustrated in Figures 4 to 6 differs from the latch member 62 in that it does not have a projection 80. Instead, it has a T-shaped opening 102 aligned with the axis of the spring 46, the cross-bar of the T-shape extending transversely of the latch member 100 and the stem thereof projecting towards the boss 50. A resilient strut 104 extends through the centre of the spring 46. For most of its length, the width of the strut 104 is such that it can pass through the wider part of the opening 102 formed by the cross-bar of the T-shape but not through the narrower part formed by the stem thereof. However the strut 104 has a narrow end portion 106 which can pass through any part of the opening 102. The length of the broader part of the strut 104 is such that when the shoulder at the junction with the narrower part 106 engage with the edges of the narrower part of the opening 102, the latch member 100 is blocked from moving its engaged to its released position. The free end of the broader part of the strut 104 is secured to the bottom of the pocket 44 at such angle that the resilience of the strut 104 biases its other end towards the narrower end of the opening 102, thereby maintaining the latch member 100 in its blocked condition.

The pushpad 82 of Figures 1 to 3 is replaced by a pushpad 108 having a cam formation 110 which engages with the free end of the narrower portion 106 of the strut 104 so that, on the one hand the resilience of the strut 104 urges the pushpad 108 away from the latch member 100 and, on the other hand, when the pushpad 108 is depressed, the cam formation 110 displaced the strut 104 away from the narrow part of the opening 102, thereby unblocking the latch member 100. When the cam formation 110 bottoms on the latch member 100, further depression of the pushpad 108 disengages the latch member 100 so that the traveller 40 is free to slide along the track 10.

Figures 7 to 10 illustrate a modification of the embodiment shown in Figures 1 to 3, having a latch member 120 which is held captive on the boss 50. However the sliding pushpad 82 is replaced by a release lever 122 having stub axles 124 on each side which are journaled in bearings (not shown) formed on each side of the pocket 44 of the traveller. The lever 122 carries a manually accessible pushpad 126 and a segmental flange 128 which has a shoulder 130 on its radially outer edge. The latch member 120 has a projection 132 projecting parallel to the flange 128 in alignment with the shoulder 130.

In its normal engaged position, as illustrated in Figure 7, the shoulders 68 on the end of the latch member 120 engage in one of the pairs of notches 26 (Figure 2) in the track 10, thereby inhibiting movement of the traveller along the track. The latch member 120, which is biased on the clockwise direction by the compression spring 46 (Figure 1), pushes upwardly on a cam formation 134 on the underside of the pushpad 126. The shoulder 130 on the flange 128 is aligned with but not actually in contact with the end of the projection 132 on the latch member 120.

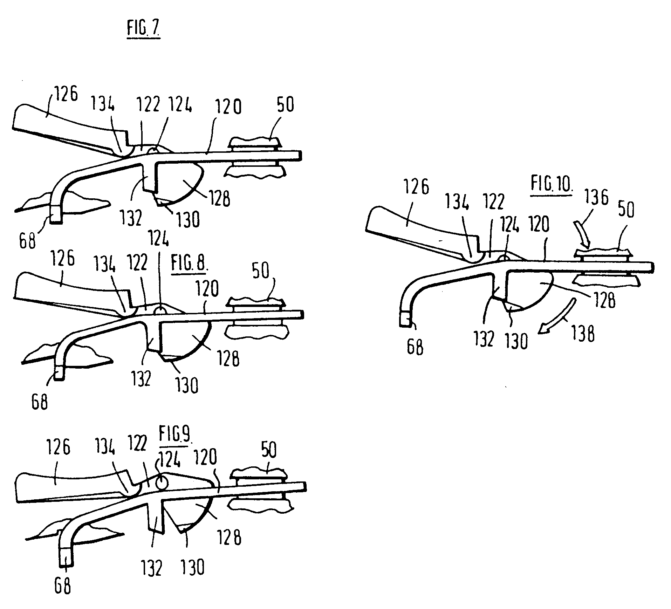

As shown in Figure 8, if the pushpad 126 is depressed, the cam formation 134 thereon depresses the latch member 120 but, before the projection 132 comes into engagement with the shoulder 130, the latter has pivoted out of the path of the former. Further depression of the pushpad 126 displaces the latch member 120 sufficiently to move the shoulders 68 clear of the notches 26, as illustrated in Figure 9, so that the traveller can be freely moved along the track 10, the ramps 32 on the latter facilitating re-engagement of the latch if movement is in the downward direction. The latch member 120 than re-engages when the pushpad 126 is released and the shoulders 68 are in alignment with a pair of notches 26.

Turning to Figure 10, if the mechanism is jubject to very high acceleration in the upward direction, as illustrated in the drawing, the inertia of the latch member 120 could be sufficient to overcome the force exerted by the spring 46 (Figure 1), the latch member 120 would tend to pivot in the direction indicated by the arrow 136 and cause inadvertent disengagement of the shoulders 68 from the notches 26. However, before such disengagement could take place, the projection 132 would come into engagement with the shoulder 130 on the segment 128 of the release lever 122. The interengaging faces of the projection 132 and the shoulder 130 are inclined so that the force exerted by the latch pivoting in the direction indicated by the arrow 136 would cause the release lever 122 to pivot in the direction indicated by the arrow 138 and thus be more firmly held in position. The release lever 122 is approximately balanced about its stub axles 124 that it is not itself affected by any such high acceleration.

The embodiments of the invention illustrated in the drawings provide a shoulder anchorage which can be located in four alternative positions. Obviously a larger or smaller number of alternative positions can be provided if required.

## Claims

1. An adjustable shoulder anchorage assembly comprising a vertically extending track (10) mounted on the interior of a vehicle body above the level of the shoulders of an occupant of an adjacent seat, a traveller (40) mounted on the track (10), a guide member (56) secured to the traveller (40) and having a slot for receiving the strap of a safety belt, a latch member (62, 100, 120) having a latching formation (68) thereon movable laterally relative to the track, between an engagement position in which the latching formation (58) is in engagement with one of a series of complementary formations (24-30) on the track (10) so as to inhibit movement of the traveller (40) along the track (10), and a release position in which the latching formation (68) is disengaged from the complementary formations (24-30), resilient means (46) for biasing the latch member (62, 100, 120) to the latching position, blocking means (78, 104, 130) for preventinn movement of the latching formation (68) out of engagement with the complementary formations (24 - 30) and a push-pad (82, 108, 122) movable against a spring vias from a first position to a second position to inhibit the blocking means (78, 104, 130) and movable from a second position to a third position to cause disengagement of the latching formation (68) from the complementary formations, characterised in that the latch member (62, 100, 120) is L-shaped with a first limb engaging with a fulcrum (60) on the traveller (40) and a second limb projecting beyond the track (10) and carrying the latching formation (68), the resilient means being arranged to apply a biasing force to the first limb directed away from the track (10) laterally relative to the track, the push-pad (82, 108, 122) being mounted for movement in a first sense from the first position to the second position and for movement in the same sense from the second position to the third position, the push-pad (82, 108, 122) engaging with the first limb when the push-pad is in the second position, and causing the first limb to pivot as the push-pad is moved to the third position.

2. An assembly according to claim 1, characterised in that the guide member (56) is mounted on the traveller (40) by a pivotal mounting (50) and the first limb of the latch member (62, 100, 120) has an opening surrounding the pivotal mounting (50).

3. An assembly according to claim 1 or 2, characterised in that the push-pad (82, 108) is resiliently biassed away from the latch member (62, 100) in the same direction as the latch member (62, 100) is resiliently biassed relative to the traveller (40) and the push-pad (82, 108) carries a cam formation (90, 110) which disables the blocking means (78, 104) when the push-pad (82, 108) is moved into abutment with the latch member (62, 100), further depression of the push-pad then causing a corresponding movement of the latch member (62, 100) which results in disengagement of the latching formation (68) from the complementary formations (24 - 30).

4. An assembly according to claim 1 or 2, characterised in that the blocking means comprises a member (78) movable longitudinally in guides (76) on the traveller (40) between a position in which it engages under a projection (80) on the latch member (62) and a position in which it is clear of such projection (80), the cam formation (90) on the push-pad (82) being adapted to displace such member (78) to the latter position.

5. An assembly according to claim 1 or 2, characterised in that the blocking means comprises a resilient strut (104) projecting from the traveller (40) substantially in the direction of movement of the latch member (100) and the push-pad (108), into engagement with the cam formation (110) on the latter, such strut (104) having a shoulder (106) which engages under a corresponding shoulder on the latch member (100).

6. An assembly according to claim 1 or 2, characterised in that the push-pad (126) is fast with a lever (122) which is pivotally mounted so as to be movable between a first position in which a blocking formation (130) thereon engages with a complementary formation (132) on the latch member (120) to inhibit movement of the latter from its first position, an intermediate position in which said blocking formation (130) is disengaged from said complementary formation (132) and an actuating formation (134) engages with the latch member (120), and a third position in which said actuating formation (134) has moved the latch member (120) into its second position.

7. An assembly according to claim 6, characterised in that the lever (122) is pivotally mounted and balanced about its pivot point (124) so as not to be susceptible to acceleration in the direction of movement of the pushpad (126).

8. An assembly according to claim 6 or 7, characterised in that the blocking formation (130) and the complementary formation (132) on the latch member (120) are so shaped that any tendency of the latch member (120) to move towards its second position, when the lever (122) is in its first position, resists movement of the lever (122) towards its intermediate position.

**Patentansprüche**

1. Einstelllbare Schulterverankerungsanordnung, mit einer sich vertikal erstreckenden Schiene (10), die in dem Inneren eines Fahrzeugkörpers oberhalb der Schulter einer auf einem benachbarten Sitz sitzenden Person befestigt ist, einem Schlitten (40), der auf der Schiene (10) befestigt ist, einem auf dem Schlitten (40) gesicherten, mit einem Schlitz zur Aufnahme des Bandes eines Sicherheitsgurts versehenen Führungsteil (56), ein Sperrglied (62, 100, 120) mit einer Sperranordnung (68) auf dieser, das lateral relativ zu der Schiene (10) beweglich ist zwischen einer Eingriffsposition, in der die Sperranordnung (68) mit einer aux einer Reihe von komplementären Anordnungen (24 - 30) auf der Schiene (10) in Eingriff ist, um so eine Bewegung des Schlittens (40) entlang der Schiene (10) zu verhindern, und eine Freigabeposition, in der die Sperranordnung (68) von den komplementären Anordnungen (24 - 30) gelöst ist, elastischen Mitteln (46) zum Belasten des Sperrglieds (62, 100, 120) in Richtung auf die Sperrposition, Blockiermitteln (78, 104, 130) zum Verhindern der Bewegung der Sperranordnung (68 aud dem Eingriff mit den komplementären Anordnungen (24 - 30) und mit einer Druckplatte (82, 108, 122), das gegen eine Federvorspannung aus einer ersten Position in eine zweite Position beweglich ist, un die Blockiermittel (78, 104, 130) zu sperren und aus einer zweiten Position in eine dritte Position beweglich ist, um eine Lösung der Sperranordnung (68) von den komplementären Anordnungen beweglich ist, dadurch gekennzeichnet, daß das sperrglied (62, 100, 120) L-förmig mit einer arsten mit einer Schulter (60) auf dem Schlitten (40) in Eingriff kommenden Schenkel und einem zweiten unter die Schiene (10) ragenden, die Sperranordnung (68) tragenden Schenkel, die elastischen Mittel derart angeordnet sing, daß sie eine vorspannends Kraft auf den ersten Schenkel, der von der Schiene (10) lateral relativ zu der Schiene (10) gerichtet ist, die Druckplatte (82, 108, 122) für eine Bewegung in einer erste Richtung von der ersten Position in die zweite Position und für eine Bewegung in derselben Richtung von der zweiten Position in die dritte Position befestigt ist, die Druckplatte (82, 108, 122) mit dem ersten Schenkel in Eingriff ist, wenn die Druckplatte in der zweiten Position ist und eine Drehung des ersten Schenkels verursacht, wenn die Druckplatte in die dritte Position bewegt wird.

2. Anordnung nach Anspruch 1, dadurch gekennzeichnet, daß das Führungstell (56) auf dem Schlitten (40) über ein Drehgelenk (50) befestigt ist und die erste Schulter des Sperrglieds (62, 100, 120) eine Öffnung hat, die das Drehgelenk (50) umgibt.

3. Anordnung nach Anspruch 1 oder 2, dadurch gekennzeichnet, daß die Druckplatte (82, 108) nachgiebig weg von dem Sperrglied (62, 100) vorgespannt ist in derselben Richtung, in der das Sperrglied (62, 100) relativ zu dem Schlitten (40) nachgiebig vorgespannt ist, und die Druckplatte (82, 108) eine Nockenanordnung (90, 110 trägt, die die Blockiermittel (78, 104) sperrt, wenn die Druckplatte (82, 108) in Anschlag mit dem Sperrglied (62, 100) bewegt wird, wobei ein weiteres Herabdrücken der Druckplatte eine entsprechende Bewegung des Sperrglisdes (62, 100) verursacht, die zu einer Lösung der Sperranordnung (68) von den komplementären Anordnungen (24 - 30) führt.

4. Anordnung nach Anspruch 1 oder 2, dadurch gekennzeichnet, daß das Blockiermittel ein teil (78) aufweist, das in Längsrichtung in Führungen (76) auf dem Schlitten (40) zwischen einer Position, in der es unter einen Vorsprung (80) auf dem Sperrglied (62) greift und eine Position, in der es von diesem Vorsprung (80) frei ist, beweglich ist, und die Nockenanordnung (90) auf die Druckplatte (82) zur Verlagerung des Teils (78) in die letztgenannte Position eingerichtet ist.

5. Anordnung nach Anspruch 1 oder 2, dadurch gekennzeichnet, daß die Blockiermittel einen elastischen stempel (104 umfassen, der vom Schlitten (40) aus im wesentlichen in di Bewegungsrichtung des sperrgliedes (100) und der Druckplatte (108) hervorragt, wenn diese in Eingriff mit der Nockenanordnung (110) auf dieser gebracht wird, wobei der stempel (104) eine Schulter (106) aufweist, die in Eibgriff unter eine entsprechende Schulter an dem Sperrglied (100) kommt.

6. Anordnung nach Anspruch 1 oder 2, dadurch gekennzeichnet, daß die Druckplatte (126) fest mit einem Hebel (122) verbunden ist, der verschwenkbar zu einer Bewegung aus einer ersten Position, in der eine Bewegung aus einer ersten Position, in de eine Blockieranordung (130) daran mit einer komplementären Anordnung (122) auf dem Sperrglied (120) zur Verhinderung dessen Bewegung aus der erste Position, einer Zwischenposition, in der die Blockieranordnung (130) von der komplementären Formation (132) gelöst ist und eine Betätigungsanordnung (134) mit dem Sperrglied (120) zusammenwirkt, und eine dritte Position, in der die Betätigungsanordnung (134) das Sperrglied (120) in seine szeite Position gebracht hat, beweglich ist.

7. Anordnung nach Anspruch 6, dadurch gekennseichnet, daß der Hebel (122) schwenkbar montiert ist und um seinen Schwenkpunkt (124) derart ausbalanciert ist, daß er einer Beschleunigung in Richtung der Bewegung der Druckplatte (126) nich ausgesetzt ist.

8. Anordnung nach Anspruch 6, oder 7, dadurch gekennzeichnet, daß die Blockieranordnung (130) und die komplementäre Anordnung (132) auf dem Sperrglied (120) derart geformt sind, daß jegliche Neigung des Sperrglieds (120) zu einer Bewegung in die zweite Position dann, wenn der Hebel (122) in seiner ersten Position ist, einer bewegung des Hebels (122) in die Zwischenposition entgegensteht.

**Revendications**

1. Ensemble d'ancrage réglable, disposé au niveau de l'épaule, comportant une piste de déplacement (10) disposée verticalement, montée à l'intérieur d'une carcasse de véhicule, au-dessus du niveau des épaules d'un occupant d'un siège voisin, un curseur (40) monté sur la piste (10), un organe de guidage (56) fixé au curseur (40) et comportant une fente destinée à recevoir la bande d'une ceinture de sécurité, un organe de verrouillage (62, 120) comportant un système de verrouillage (68) monté sur cet organe de verrouillage pouvant se déplacer latéralement par rapport à la piste entre une position d'engagement dans laquelle le système de verrouillage (68) engrène avec une série de structures complémentaires (24-30) ménagées sur la piste (10) afin d'empêcher le déplacement du curseur (40) le long de la piste (10), et une position de libération dans laquelle le système de verrouillage (68) est dégagé des structures complémentaires (24-30), des moyens élastiques (46) servant à solliciter l'organe de vérrouillage (62, 100, 120) en position de verrouillage, des moyens de blocage (78, 104, 130) servant à empêcher le déplacement de dégagement du système de verrouillage (68) hors des structures complémentaires (24-30) et un poussoir (82, 108, 122) déplaçable contre une sollicitation élastique depuis une première position à une second position de manière à inhiber les moyens de blocage (78, 104, 130) et déplaçable depuis une deuxième position à une troisième position de manière à dégager le système de verrouillage (68) des structures complémentaires, caractérisé en ce que l'organe de verrouillage (62, 100, 120) est en forme de L dont une première branche est engagée dans un point (60) du curseur (40) et la seconde branche en saillie au-delà de la piste (10) et portant le système de verrouillage (68), les moyens élastiques étant agencés de manière à appliquer un force de sollicitation à la première branche dirigée à l'opposé de la piste (10) latéralement par rapport à la piste, le poussoir (82, 108, 122) étant monté de manière à se déplacer dans une premier sens à partie de la première position à la deuxième position et à se déplacer dans le même sens depuis la deuxième position à la troisième position, le poussoir (82, 108, 122) venant en contact avec la première branche lorsque le poussoir se trouve dans la deuxième position, et amenant la première branche à pivoter lorsque le poussoir est déplacé dans la troisième position.

2. Ensemble selon la revendication 1, caractérisé en ce que l'organe de guidage (56) est monté sur le curseur (40) à l'aide d'un moyen monté pivotant (50) et la première branche de l'organe de verrouillage (62, 100, 120) comporte une ouverture entourant le moyen monté pivotant (50).

3. Ensemble selon la revendication 1 ou 2, caractérisé en ce que le poussoir (82, 108) est écarté élastiquement de l'organe de verrouillage (62, 100) dans la même direction que celle dans laquelle l'organe de verrouillage (62, 100, 120) est sollicité élastiquement par rapport au curseur (40) et que le poussoir (82, 108) porte un système à came (90, 110) qui invalide les moyens de blocage (78, 104) lorsque le poussoir (82, 108) est amené en butée contre l'organe de verrouillage (62, 100), un enfoncement supplémentaire du poussoir provoquant alors un déplacement correspondant de l'organe de verrouillage (62, 100), qui provoque un dégagement du système de verrouillage (68) hors des structures complémentaires (24-30).

4. Ensemble selon la revendication 1 ou 2, caractérisé en ce que les moyens de blocage comprennent un organe (78) déplaçable longitudinalement dans des guides (76) prévus sur le curseur (40) entre une position dans laquelle il s'engage au-dessous d'une partie saillante (80) prévue sur l'organe de verrouillage (82), et une position dans laquelle il est dégagé d'une telle partie saillante (80), le système à came (90) ménagé sur le poussoir (91) étant apte à déplacer un tel organe (78) pour l'amener dans cette dernière position.

5. Ensemble selon la revendication 1 ou 2, caractérisé en ce que les moyens de blocage comprennent un support élastique (104) faisant saillie à partir du curseur (40), essentiellement suivant la direction de déplacement de l'organe de verrouillage (100) et du poussoir (108), pour venir en contact avec le système à came (110) ménagé sur le poussoir, ce support (104) comportant un épaulement (106) qui s'engage au-dessous d'un épaulement correspondant ménagé sur l'organe de verrouillage (100).

6. Ensemble selon la revendication 1 ou 2, caractérisé en ce que le poussoir (126) est solidaire d'un levier (122) qui est monté pivotant de manière à pouvoir être déplacé entre une première position dans laquelle un dispositif de blocage (130) situé sur ces moyens contacte une structure complémentaire (132) située sur l'organe de verrouillage (120) de manière à empêcher le déplacement de ce dernier à partir de sa première position, une position intermédiaire dans laquelle ledit dispositif de blocage (130) est dégagé de ladite structure complémentaire (132) et dans laquelle un système d'actionnement (134) engrène avec l'organe de verrouillage (120), et une troisième position dans laquelle ledit système d'actionnement (134) a amené l'organe de verrouillage (120) dans sa seconde position.

7. Ensemble selon la revendication 6, caractérisé en ce que le levier (122) est monté pivotant et est en équilibre autour de son point de pivotement (124) de manière à ne pas faire l'objet d'une accélération dans la direction du déplacement du poussoir (126).

8. Ensemble selon la revendication 6 ou 7, caractérisé en ce que le dispositif de blocage (130) et la structure complémentaire (132) située sur l'organe de verrouillage (120) sont conformés de manière que toute tendance de l'organe de verrouillage (120) à se déplacer en direction de sa seconde position, alors que le levier (122) est dans sa première position, s'oppose au déplacement du levier (122) en direction de sa position intermédiaire.

EP 0 125 860 B2

FIG.1

FIG.2.

FIG.3.

FIG.4.

FIG. 5.

FIG. 6.

FIG. 7

FIG. 8.

FIG.9.

FIG. 10.